# EUROPÄISCHE PATENTANMELDUNG

(11) **EP 4 782 278 A1**
(43) Veröffentlichungstag der Anmeldung: **29.07.2026**
(21) Anmeldenummer: 25153775.9
(22) Anmeldetag: 24.01.2025
(51) Int. Cl.: B60P 7/13, B65D 90/00, B60P 1/64, B65D 90/14

(54) **VERFAHREN UND ANORDNUNG ZUM POSITIONIEREN UND/ODER AUSRICHTEN EINES CONTAINERS**

(71) Anmelder: DREHTAINER GmbH, 19246 Valluhn (DE)
(72) Erfinder: Ahrendt, Hauke, 19246 Valluhn (DE)
(74) Vertreter: Stork Bamberger Patentanwälte PartmbB

(57) **Zusammenfassung**

Die Erfindung betrifft ein Verfahren zum Positionieren und/oder Ausrichten eines Containers (10) relativ zu einem den Container (10) tragenden Rahmenelement (12), wobei der Container (10) zumindest rahmenelementseitig Eckbeschläge (11) umfasst, dessen Positionen relativ zu dem Container (10) jeweils mittels steuerbeweglichen an dem Container (10) angeordneten Stellelementen (13) verstellbar eingerichtet sind und an dem Rahmenelement (12) Verriegelungselemente (14) ortsfest angeordnet sind, die zum lösbaren Arretieren der Eckbeschläge (11) ausgebildet und eingerichtet sind, wobei zunächst die Eckbeschläge (11) mittels der Verriegelungselemente (14) unter Belassung einer Restbeweglichkeit des Containers (10) an dem Rahmenelement (12) in einer Transportstellung verbunden werden und anschließend die Position und/oder Ausrichtung des Containers (10) in einer Hubstellung durch Ansteuern der Stellelemente (13) relativ zu dem Rahmenelement (12) verändert wird. Des Weiteren betrifft die Erfindung eine entsprechende Anordnung.

## Beschreibung

Die vorliegende Erfindung betrifft ein Verfahren zum Positionieren und/oder Ausrichten eines Containers relativ zu einem den Container tragenden Rahmenelement.

Des Weiteren betrifft die Erfindung eine Anordnung zum Positionieren und/oder Ausrichten eines Containers relativ zu einem den Container tragenden Rahmenelement, umfassend den Container sowie das Rahmenelement.

Derartige Verfahren und Anordnungen kommen regelmäßig dann zum Einsatz, wenn es erforderlich ist, die Container am Aufstellort möglichst waagerecht auszurichten, oder in ihrer Höhe zu nivellieren. Ein solcher Bedarf entsteht beispielsweise bei der Errichtung mobiler Gebäude aus mehreren Einzelcontainern, die miteinander gekoppelt werden sollen. Heutiges ist jedoch erforderlich, einzelne Container beim Aufstellen im Gelände Unebenheiten der Geländeoberfläche anzupassen, um eine möglichst waagerechte Ausrichtung sicherzustellen.

Aus dem Dokument WO 2023/169623 A1 geht eine Anhebe- und ab senken Anordnung mit einer Containerverriegelungsvorrichtung auf einem Fahrzeug hervor. Diese umfasst eine zu Beladungszwecken unter die Ladefläche eines Fahrzeugs absenkbare Verriegelung, die es erlaubt, Container mit verschiedenen Eckbeschlagskonfigurationen in einer erhöhten Ladeposition auf der Ladefläche des Fahrzeugs zu sichern.

Das Dokument WO 2016/1076231 A1 offenbart einen höhenverstellbaren Container mit veränderlicher Bauform Weise mit veränderlichem Volumen. Der Container umfasst zum Anheben bzw. Absenken des Containers eine Hebevorrichtung, die längenveränderbare, den jeweiligen Ecken des Containers zugeordnete Stützen aufweist.

Bei den bekannten Vorrichtungen und Verfahren zur Nivellierung und/oder Höhenverstellung von Containern ist es stets erforderlich, entweder die Containerladeschnittstelle konstruktiv zu verändern und/oder zunächst die Verbindung der Eckbeschläge des Containers zu lösen, mittels dessen der Container während des Transports zuvor gesichert war, bevor ein Ausrichten und Positionieren des Containers überhaupt möglich wird.

Es ist daher Aufgabe der vorliegenden Erfindung, ein Verfahren und eine Anordnung vorzuschlagen, die ein Ausrichten und Positionieren von Containern unter Verwendung von Standard-Containerladeschnittstellen ermöglichen. Zudem ist es Aufgabe ein Verfahren und eine Anordnung vorzuschlagen, mittels derer eine solche Positionierung von Containern möglich ist, ohne zuvor die Verbindung der Eckbeschläge des Containers zu lösen.

Die Aufgabe wird durch das eingangs genannte Verfahren dadurch gelöst, dass der Container zumindest rahmenelementseitig Eckbeschläge umfasst, dessen Positionen relativ zu dem Container jeweils mittels steuerbeweglichen an dem Container angeordneten Stellelementen verstellbar eingerichtet sind und an dem Rahmenelement Verriegelungselemente ortsfest angeordnet sind, die zum lösbaren Arretieren der Eckbeschläge ausgebildet und eingerichtet sind, wobei zunächst die Eckbeschläge mittels der Verriegelungselemente unter Belassung einer Restbeweglichkeit des Containers an dem Rahmenelement in einer Transportstellung verbunden werden und anschließend die Position und/oder Ausrichtung des Containers in einer Hubstellung durch Ansteuern der Stellelemente relativ zu dem Rahmenelement verändert wird. Auf diese Weise ist es möglich, den Container zu positionieren und/oder auszurichten, ohne zuvor dessen Verbindung über die Eckbeschläge mit dem Rahmenelement zu lösen. Die Verriegelungselemente weisen regelmäßig im Zusammenwirken mit den Eckbeschlägen des Containers eine hinreichende Lose auf, die einerseits die erforderliche Arretierung des Containers an dem Rahmenelement bewirkt, andererseits jedoch eine gewisse Beweglichkeit des Containers relativ zu dem Rahmenelement zulässt. Vorteilhafterweise kann so der Container im verbundenen bzw. arretierten Zustand in gewissen Grenzen mittels der Stellelemente positioniert und ausgerichtet werden. Die genannte Restbeweglichkeit lässt es beispielsweise zu, Geländeneigungen von bis zu 5° durch entsprechendes Positionieren mittels der Stellelemente auszugleichen.

Vorzugsweise sind die Verriegelungselement derart ausgebildet und eingerichtet, dass diese die genannte Restbeweglichkeit aufweisen, die sowohl ein Neige- als auch eine gewissen Translationsbewegung zulässt. Die Verriegelungselemente sind also bevorzugt so eingerichtet, dass die Eckbeschläge um ein vorgegebenes Maß verschiebbar sind.

Weiter bevorzugt sind die Stellelemente jeweils den Eckbeschlägen direkt zugeordnet, sodass jeder Eckbeschlag über jeweils eines der Stellelemente gesteuert bewegbar eingerichtet ist. Es ist jedoch auch möglich, einigen der Eckbeschläge, beispielsweise jeweils zwei der Eckbeschläge an einer Containerquerseite, eines der Stellelemente indirekt zuzuordnen. Beispielsweise sind die Eckbeschläge an einer Traverse angeordnet, die wiederum mittels einem dieser Traverse zugeordneten Stellelement steuerbeweglich eingerichtet ist.

Eine zweckmäßige Ausgestaltung der Erfindung ist dadurch gekennzeichnet, dass die Stellelemente an den Eckbeschlägen gelenkig angeordnet sind. Dies bietet den Vorteil, dass der Container sowohl in seiner Höhe, als auch einer gedachten, durch das Rahmenelement aufgespannten Ebene in seiner Position verstellbar eingerichtet ist. Vorzugsweise sind die Eckbeschläge mittels eines Kugelgelenks an den Stellelemente angeordnet.

Gemäß einer weiteren bevorzugten Ausbildung der Erfindung werden die Stellelemente elektromotorisch, hydraulisch oder mittels manuell bestätigbarer Bedienelemente steuerbeweglich angetrieben werden. Dies bietet den Vorteil, dass die Position des Containers auf komfortable Weise verstellbar eingerichtet ist.

Eine bevorzugte Weiterbildung der Erfindung zeichnet sich dadurch aus, dass die Eckbeschläge mittels lösbarer Sicherungsmittel in der Transportstellung mit den Verriegelungselementen und/oder dem Rahmenelement miteinander in einer Sicherungsstellung arretiert werden. Durch die Sicherungsmittel ist der Container in der Transportstellung zusätzlich an dem Rahmenelement befestigt. Während des Transportes wirkende Kräfte werden so über die Sicherungsmittel in das Rahmenelement eingeleitet, sodass keine äußeren Kräfte auf die Stellelemente einwirken. Die erfindungsgemäßen Sicherungsmittel erfüllen damit die Funktion einer Zusatzsicherung des Containers an dem Rahmenelement

Eine weitere zweckmäßige Ausbildung der Erfindung ist durch Lösen der Sicherungsmittel vor dem Verändern der Position und/oder Ausrichtung des Containers mittels der Stellelemente gekennzeichnet. Durch das Lösen der Sicherungsmittel ist der Container nur noch über die Wirkverbindung zwischen den Verriegelungselementen und den Eckbeschlägen mit dem Rahmenelement verbunden. Auf diese Weise erhält der Container die eingangs genannte hinreichende Lose, um ein Ausrichten und/oder Positionieren in dem genannten Umfang zu ermöglichen.

Gemäß einer weiteren bevorzugten Ausführungsform ist das Rahmenelement auf einem Fahrzeugauflieger angeordnet. Auf diese Weise ist es möglich, den Container relativ zum Fahrzeug Auflieger zu positionieren und/oder auszurichten.

Eine weitere zweckmäßige Ausgestaltung der Erfindung ist dadurch gekennzeichnet, dass die Ladefläche eines Fahrzeugsaufliegers das Rahmenelement bildet. Mit anderen Worten ist das Rahmenelement als integraler Bestandteil des Fahrzeugs ausgebildet.

Eine weitere zweckmäßige Ausgestaltung der Erfindung ist gekennzeichnet durch Sperren der Ansteuerung der Stellelemente falls sich mindestens eines der Sicherungsmittel in der Sicherungsstellung befindet. Auf diese Weise wird sichergestellt, dass der Container mittels der Stellelemente erst dann bewegt werden kann, wenn die Sicherungsmittel zuvor entfernt worden sind.

Gemäß einer weiteren bevorzugten Ausbildung der Erfindung umfasst das Verfahren initiales gleichzeitiges Ansteuern aller der Stellelemente zum Überführen des Containers aus der Transportstellung in eine Hubstellung unter Erreichen einer vorgegebenen Mindesthöhe über dem Rahmenelement. Vorteilhafterweise wird der Container so zunächst angehoben, um hinreichend weit von dem Rahmenelement frei zu kommen, sodass der Container oder Teile des Containers kollisionsfrei gegenüber dem Rahmenelement in seiner Position verstellt werden kann.

Die Aufgabe wird durch eine Anordnung mit den eingangs genannten Merkmalen dadurch gelöst, dass, der Container zumindest rahmenelementseitig Eckbeschläge umfasst, dessen Positionen relativ zu dem Container jeweils mittels an dem Container angeordneten steuerbeweglichen Stellelementen verstellbar eingerichtet sind, wobei die Anordnung eine Steuereinrichtung umfasst, die zur Ansteuerung der Stellelemente eingerichtet ist, und wobei an dem Rahmenelement Verriegelungselemente ortsfest angeordnet sind, die zum lösbaren Arretieren der Eckbeschläge ausgebildet und eingerichtet sind, wobei die Eckbeschläge und Verriegelungselemente derart eingerichtet sind, dass diese unter Belassung einer Restbeweglichkeit des Containers an dem Rahmenelement in einer Transportstellung verbindbar eingerichtet sind und die Stellelemente ausgebildet sind, die Position und/oder Ausrichtung des Containers in einer Hubstellung durch Ansteuern der Stellelemente relativ zu dem Rahmenelement zu verändern, während die Eckbeschläge mit den Verriegelungselementen verbunden bzw. entsprechend arretiert sind. Die mit der erfindungsgemäßen Anordnung einhergehenden Vorteile entsprechen in analoger Weise denjenigen des erfindungsgemäßen Verfahrens. Gleiches gilt für die im Folgenden genannten vorteilhaften weiteren Ausführungsform der Anordnung. Zur Vermeidung von Wiederholungen wird daher auf die zuvor im Zusammenhang mit den Ausführungsform des erfindungsgemäßen Verfahrens verwiesen.

Eine zweckmäßige Ausgestaltung der Erfindung ist dadurch gekennzeichnet, dass die Stellelemente an den Eckbeschlägen jeweils mittels Gelenken angeordnet sind.

Gemäß einer weiteren bevorzugten Ausbildung der Erfindung sind die Stellelemente elektromotorisch, hydraulisch oder mittels manuell betätigbar ausgebildeten Bedienelementen steuerbeweglich antreibar eingerichtet.

Eine weitere zweckmäßige Ausgestaltung der Erfindung ist dadurch gekennzeichnet, dass die Eckbeschläge eingerichtet sind, mittels lösbarer Sicherungsmittel in der Transportstellung mit den Verriegelungselementen und/oder dem Rahmenelement miteinander in einer Sicherungsstellung verbunden bzw. arretiert zu werden.

Gemäß einer weiteren bevorzugten Ausbildung der Erfindung ist das Rahmenelement auf einem Fahrzeugauflieger angeordnet.

Gemäß einer weiteren bevorzugten Ausbildung der Erfindung bildet die Ladefläche eines Fahrzeugsaufliegers das Rahmenelement.

Eine weitere zweckmäßige Ausgestaltung der Erfindung ist dadurch gekennzeichnet, dass die Steuereinrichtung ausgebildet und eingerichtet ist, die Ansteuerung der Stellelemente zu sperren, falls sich mindestens eines der Sicherungsmittel in der Sicherungsstellung befindet.

Eine bevorzugte Weiterbildung der Erfindung zeichnet sich dadurch aus, dass die Steuereinrichtung ausgebildet ist, durch initiale gleichzeitige Ansteuerung aller der Stellelemente den Container aus der Transportstellung in eine Hubstellung unter Erreichen einer vorgegebenen Mindesthöhe über dem Rahmenelement zu überführen.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine Seitenansicht eines Fahrzeugaufliegers mit darauf angeordnetem Container in der Transportstellung
- Fig. 2: eine perspektivische Ansicht des in Fig. 1 gezeigten Fahrzeugsaufliegers mit Container,
- Fig. 3: eine Seitenansicht eines Fahrzeugaufliegers mit darauf angeordnetem Container in der Hubstellung
und
- Fig. 4: eine perspektivische Ansicht des in Fig. 3 gezeigten Fahrzeugsaufliegers mit Container.

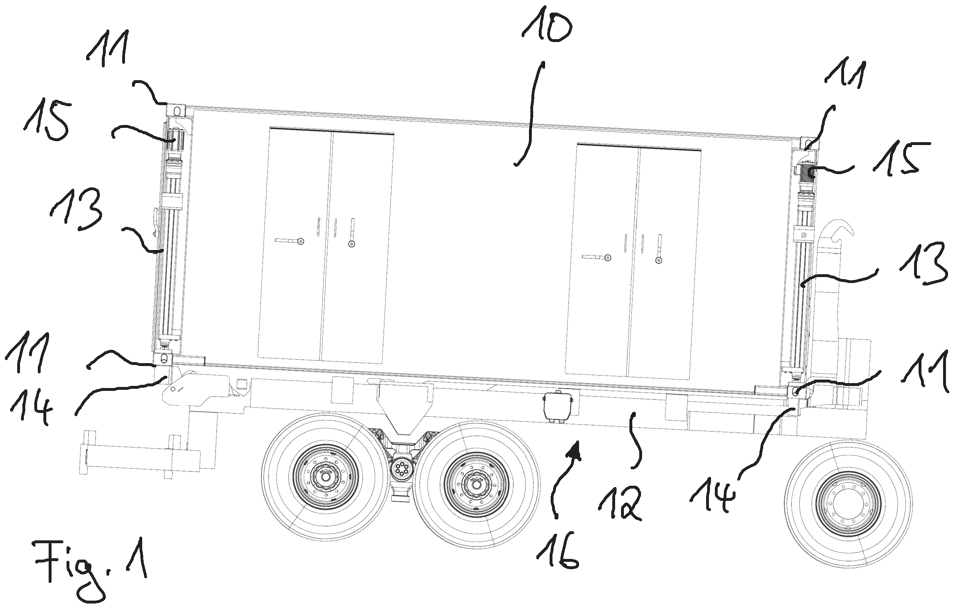

Im Folgenden wird das erfindungsgemäße Verfahren sowie die erfindungsgemäße Vorrichtung anhand der in den Figuren 1 bis 4 gezeigten beispielhaften Ausführung näher erläutert.

Der in der Zeichnung gezeigte Container 10 umfasst Eckbeschläge 11, die zumindest rahmenelementseitig an dem Container 10 angeordnet sind. Mit anderen Worten weist der Container 10 zumindest auf seiner einem Rahmenelement 12 zugewandten Seite diese Eckbeschläge 11 auf. Der in der Zeichnung gezeigte Container 10 weist vorzugsweise an sämtlichen Ecken derartige Eckbeschläge 11 auf. Das Rahmenelement 12 mit den Verriegelungselementen 14 bildet eine Containerladeschnittstelle, auf der der Container 10 aufsitzt. Erfindungsgemäß ist es möglich, den Container bis ca. 5° in Längs- und Querrichtung zu nivellieren.

Die Eckbeschläge 11 sind vorzugweise standardisierte Containerkomponenten. Herkömmliche Container 10 mit solchen Eckbeschlägen 11 können zur Verwendung mit dem erfindungsgemäßen Verfahren sowie der erfindungsgemäßen Anordnung auf einfache Art und Weise umgerüstet werden. Hierzu werden die Eckbeschläge 11 von dem Container 10 zunächst abgetrennt. Anschließend werden die Eckbeschläge 11 jeweils an den Stellelementen 13 montiert und diese Stellelemente 13 wieder an dem Container 10 befestigt, sodass die Eckbeschläge 11 - wie zuvor beschrieben - steuerbeweglich sind.

Vorzugsweise weisen die Eckbeschläge 11 - in der Zeichnung nicht gezeigte - Verbindungsfortsätze, beispielsweise in Form von Dornen, auf, die als Zentrierhilfe beim Absetzen des Container 10 auf den Verriegelungselementen 14 dienen.

Weiter bevorzugt sind die Stellelement 13 innenseitig in dem Container 10 angeordnet, um diese einerseits vor äußeren Einflüssen zu schützen. Andererseits wird durch die innenseitige Anordnung das Containerstandardmaß eingehalten und zugleich eine von den Stellelementen 13 andernfalls ausgehende Verletzungsgefahr minimiert.

Die Positionen der Eckbeschläge 11 sind relativ zu dem Container 10 verstellbar. Hierzu sind am dem Container 10 Stellelemente 13 angeordnet, mittels derer die Eckbeschläge 11 bewegt werden können. Die Stellelemente 13 sind steuerbeweglich ausgebildet und eingerichtet, d.h. die Länge der Stellelemente 13 kann durch entsprechende Ansteuerung oder Betätigung variiert werden. An dem Rahmenelement 12 sind Verriegelungselemente 14 ortsfest angeordnet. Die Verriegelungselemente 14 sind zum lösbaren Arretieren der Eckbeschläge 11 ausgebildet und eingerichtet. Die Ansteuerung der Stelleelemente 13 erfolgt beispielsweise mittels einer - in der Zeichnung nicht gezeigten - Steuereinrichtung, die zur Ansteuerung der Stellelemente eingerichtet ist.

Die Steuereinrichtung ist insbesondere derart ausgebildet, dass mehrere jeweils auf einem Rahmenelement 12 angeordnete Container 10 gemeinsam positioniert und/oder ausgerichtet werden können. So können die Container 10 beispielsweise gemeinsam auf ein einheitliches Niveau angehoben werden.

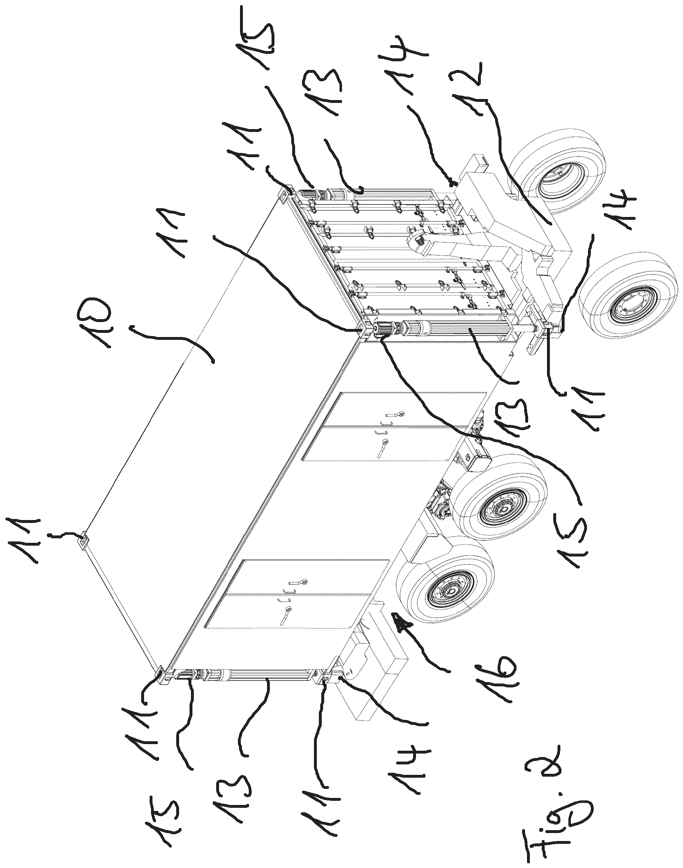

Die Verriegelungselemente 14 und/oder die Eckbeschläge 12 sind derart eingerichtet, dass diese eine Restbeweglichkeit des Containers 10 relativ zu dem Rahmenelement 12 zulassen. So ist der Container 10 mittels der Verriegelungselemente 14 in einer in den Figuren 1 und 2 gezeigten Transportstellung an dem Rahmenelement 12 derart verbunden bzw. arretiert, dass der Container 10 in einem gewissen Maß positionsveränderlich ist.

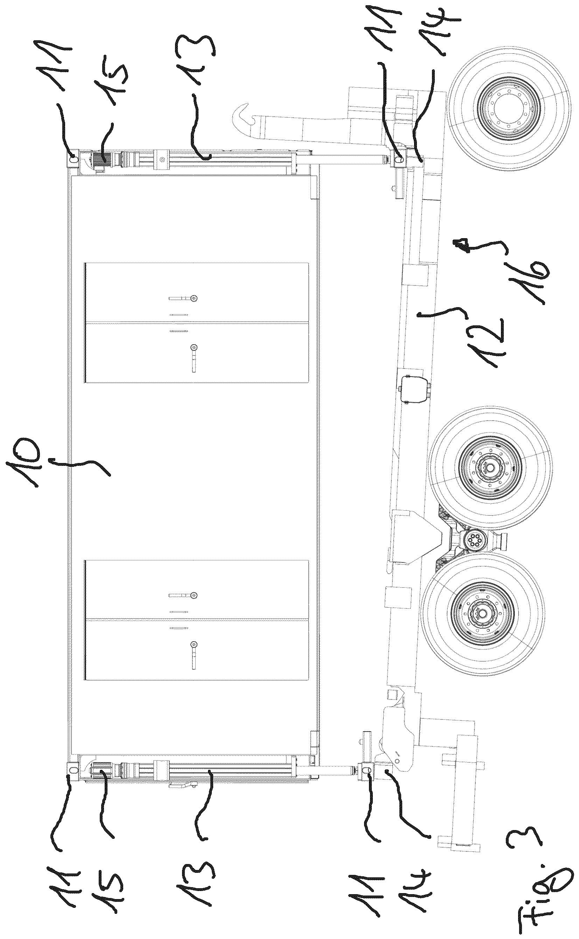

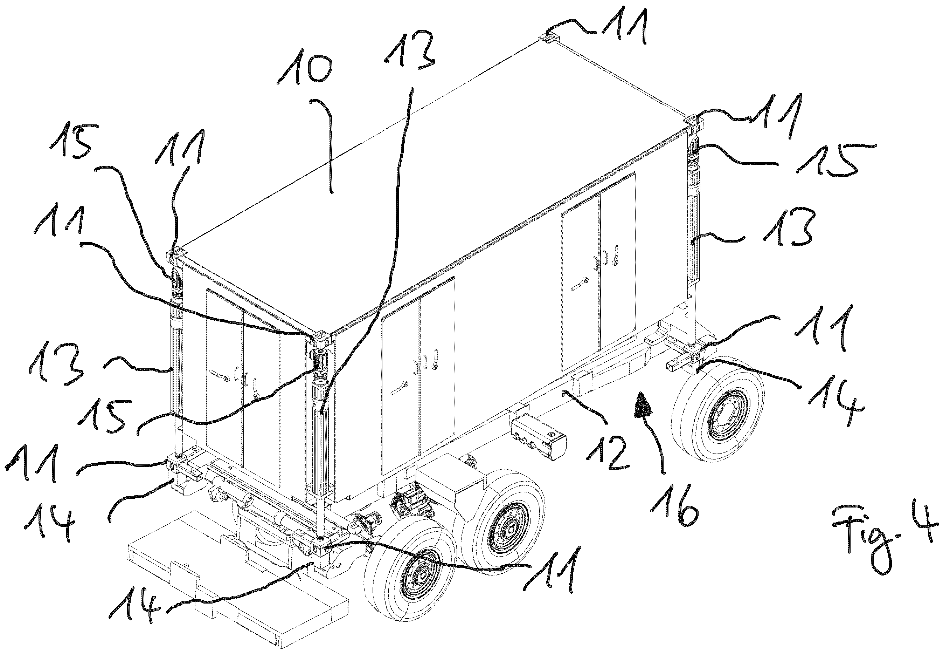

Durch Ansteuern bzw. Betätigen der Stellelemente 13 ist die Position und/oder Ausrichtung des Containers 10 relativ zu dem Rahmenelement 12 veränderbar, sodass der Container 10 in eine - in den Figuren 2 und 4 gezeigte - Hubstellung überführbar ist. Der Container 10 kann auf diese Weise positioniert und/oder ausgerichtet werden, ohne die Arretierung zwischen den Eckbeschlägen 11 und den Verriegelungselementen 14 zu lösen. So kann beispielsweise der Container 10 - wie in den Figuren 3 und 4 beispielhaft dargestellt - horizontal nivelliert werden, während das Rahmenelement 12 auf unebenen Untergrund steht.

Vorzugsweise sind die Stellelemente 13 an den Eckbeschlägen 11 gelenkig angeordnet. Die Stellelemente 13 sind also an den Eckbeschlägen 11 jeweils mittels - in der Zeichnung nicht näher gezeigten - Gelenken angeordnet. Weiter bevorzugt weisen die Stellelemente 13 an ihrem dem jeweiligen Eckbeschlag 11 zugeordneten Ende beispielsweise einen - in der Zeichnung nicht näher gezeigten - Kugelkopf auf. Mit anderen Worten ist die Verbindung zwischen Stellelement 13 und Eckbeschlag 11 jeweils bevorzugt mittels eines Kugelgelenks ausgebildet.

Gemäß einer bevorzugten Ausbildung der Erfindung werden die Stellelemente 13 elektromotorisch, hydraulisch oder mittels manuell bestätigbarer Bedienelemente steuerbeweglich angetrieben. werden. In der Zeichnung ist beispielhaft ein Elektromotor 15 als steuerbarer Antrieb der Stellelemente 13 gezeigt.

Weiter bevorzugt sind die Eckbeschläge 11 mittels lösbarer - in der Zeichnung nicht gezeigter - Sicherungsmittel in der Transportstellung mit den Verriegelungselementen 14 und/oder dem Rahmenelement 12 miteinander in einer Sicherungsstellung verbunden bzw. arretiert. Diese Sicherungsmittel bewirken eine zusätzliche Befestigung des Containers an dem Rahmenelement 12 in der Transportstellung.

Vorzugsweise werden die Sicherungsmittel vor dem Verändern der Position und/oder dem Ausrichten des Containers 10 mittels der Stellelemente 13 gelöst, um die erforderliche Lose bzw. Restbeweglichkeit des Container 10 zu bewirken, die erst ein Ausrichten und/oder Positionieren in dem genannten Umfang trotz bestehender Verbindung bzw. Arretierung von Verriegelungselementen 14 mit den Eckbeschlägen 12 ermöglicht.

Vorteilhafterweise ist das Rahmenelement 12 auf einem Fahrzeugauflieger 16 angeordnet. Besonders bevorzugt bildet - wie in der Zeichnung gezeigt - die Ladefläche des Fahrzeugsaufliegers 16 das Rahmenelement 12. Bei einer Ausführungsform mit separaten Rahmenelement 12 ist es möglich, das Rahmenelement 12 mit dem Container 10 unmittelbar auf dem Untergrund abzustellen und den Container 10 anschließend mittels der Stellelemente 13 zu positionieren. Vorteilhafterweise sind in diesem Fall in den Ecken des Rahmenelements 12 - in der Zeichnung nicht gezeigte - Auflageplatten angeordnet, die die Funktion einer Druckverteilung auf dem Untergrund übernehmen. Weiter bevorzugt sind die Auflageplatten nicht unmittelbar an dem Rahmenelement 12 angeordnet, sondern werden zuvor auf den Untergrund aufgebracht. Das Rahmenelement 12 wird anschließend auf diesen Auflageplatten abgesetzt. Die Auflageplatten bilden daher einerseits eine Gleitführung für das Rahmenelement 12 auf dem Untergrund und erfüllen andererseits die Funktion einer Lastverteilung, um ein Einsinken des Rahmenelements 12, insbesondere bei geringer Tragfähigkeit des Untergrundes, zu verhindern. Die Oberseiten der Auflageplatten sind vorzugsweise als Gleitflächen ausgebildet und eingerichtet, beispielsweise durch Beschichtung mit entsprechenden Gleitmitteln, die den Reibungskoeffizient gegenüber einer unbeschichteten Gleitfläche deutlich reduzieren.

Eine weitere zweckmäßige Ausgestaltung der Erfindung ist gekennzeichnet durch Sperren der Ansteuerung der Stellelemente 13 falls sich mindestens eines der Sicherungsmittel in der Sicherungsstellung befindet. Eine solches Sperren kann beispielsweise durch elektronische, hydraulische oder mechanische Verriegelung erfolgen, sodass die Ansteuerung der Stellelemente 13 im genannten Fall unterdrückt wird.

Vorzugsweise werden alle der Stellelemente 13 zum Überführen des Containers aus der Transportstellung in die Hubstellung initial gleichzeitig angesteuert, um so eine vorgegebene Mindesthöhe über dem Rahmenelement 12 zu erreichen.

## Patentansprüche

1. Verfahren zum Positionieren und/oder Ausrichten eines Containers (10) relativ zu einem den Container (10) tragenden Rahmenelement (12),
wobei der Container (10) zumindest rahmenelementseitig Eckbeschläge (11) umfasst, dessen Positionen relativ zu dem Container (10) jeweils mittels steuerbeweglichen an dem Container (10) angeordneten Stellelementen (13) verstellbar eingerichtet sind und
an dem Rahmenelement (12) Verriegelungselemente (14) ortsfest angeordnet sind, die zum lösbaren Arretieren der Eckbeschläge (11) ausgebildet und eingerichtet sind, wobei
zunächst die Eckbeschläge (11) mittels der Verriegelungselemente (14) unter Belassung einer Restbeweglichkeit des Containers (10) an dem Rahmenelement (12) in einer Transportstellung verbunden werden und
anschließend die Position und/oder Ausrichtung des Containers (10) in einer Hubstellung durch Ansteuern der Stellelemente (13) relativ zu dem Rahmenelement (12) verändert wird.

2. Verfahren nach Anspruch 1, **dadurch gekennzeichnet, dass** die Stellelemente (13) an den Eckbeschlägen (11) gelenkig angeordnet sind.

3. Verfahren nach einem der Ansprüche 1 bis 2, **dadurch gekennzeichnet, dass** die Stellelemente (13) elektromotorisch, hydraulisch oder mittels manuell bestätigbarer Bedienelemente steuerbeweglich angetrieben werden.

4. Verfahren nach einem der Ansprüche 1 bis 3, **gekennzeichnet dadurch, dass** die Eckbeschläge (11) mittels lösbarer Sicherungsmittel in der Transportstellung mit den Verriegelungselementen (14) und/oder dem Rahmenelement (12) miteinander in einer Sicherungsstellung arretiert werden.

5. Verfahren nach Anspruch 4, **gekennzeichnet durch** Lösen der Sicherungsmittel vor dem Verändern der Position und/oder Ausrichtung des Containers (10) mittels der Stellelemente (13).

6. Verfahren nach einem der Ansprüche 1 bis 5, **dadurch gekennzeichnet, dass** das Rahmenelement (12) auf einem Fahrzeugauflieger (16) angeordnet ist.

7. Verfahren nach einem der Ansprüche 1 bis 5, **dadurch gekennzeichnet, dass** die Ladefläche eines Fahrzeugsaufliegers (16) das Rahmenelement (12) bildet.

8. Verfahren nach einem der Ansprüche 4 bis 7, **gekennzeichnet durch** Sperren der Ansteuerung der Stellelemente (13) falls sich mindestens eines der Sicherungsmittel in der Sicherungsstellung befindet.

9. Verfahren nach einem der Ansprüche 1 bis 8, **gekennzeichnet durch** initiales gleichzeitiges Ansteuern aller der Stellelemente (13) zum Überführen des Containers (10) aus der Transportstellung in eine Hubstellung unter Erreichen einer vorgegebenen Mindesthöhe über dem Rahmenelement (12).

10. Anordnung zum Positionieren und/oder Ausrichten eines Containers (10) relativ zu einem den Container (10) tragenden Rahmenelement (12), umfassend den Container (10) sowie das Rahmenelement (12), wobei
der Container (10) zumindest rahmenelementseitig Eckbeschläge (11) umfasst, dessen Positionen relativ zu dem Container (10) jeweils mittels an dem Container (10) angeordneten steuerbeweglichen Stellelementen (13) verstellbar eingerichtet sind, wobei die Anordnung eine Steuereinrichtung umfasst, die zur Ansteuerung der Stellelemente (13) eingerichtet ist, und wobei
an dem Rahmenelement (12) Verriegelungselemente (14) ortsfest angeordnet sind, die zum lösbaren Arretieren der Eckbeschläge (11) ausgebildet und eingerichtet sind, wobei
die Eckbeschläge (11) und Verriegelungselemente (14) derart eingerichtet sind, dass diese unter Belassung einer Restbeweglichkeit des Containers (10) an dem Rahmenelement (12) in einer Transportstellung verbindbar eingerichtet sind und
die Stellelemente (13) ausgebildet sind, die Position und/oder Ausrichtung des Containers (10) in einer Hubstellung durch Ansteuern der Stellelemente (13) relativ zu dem Rahmenelement (12) zu verändern, während die Eckbeschläge (11) mit den Verriegelungselementen (14) verbunden sind.

11. Anordnung nach Anspruch 10, **dadurch gekennzeichnet, dass** die Stellelemente (13) an den Eckbeschlägen (11) jeweils mittels Gelenken angeordnet sind.

12. Anordnung nach einem der Ansprüche 10 oder 11, **dadurch gekennzeichnet, dass** die Stellelemente (13) elektromotorisch, hydraulisch oder mittels manuell betätigbar ausgebildeten Bedienelementen steuerbeweglich antreibar eingerichtet sind.

13. Anordnung nach einem der Ansprüche 10 bis 12, **dadurch gekennzeichnet, dass** die Eckbeschläge (11) eingerichtet sind, mittels lösbarer Sicherungsmittel in der Transportstellung mit den Verriegelungselementen (14) und/oder dem Rahmenelement (12) miteinander in einer Sicherungsstellung arretiert zu werden.

14. Anordnung nach einem der Ansprüche 10 bis 13, **dadurch gekennzeichnet, dass** das Rahmenelement (14) auf einem Fahrzeugauflieger (16) angeordnet ist.

15. Anordnung einem der Ansprüche 10 bis 14, **dadurch gekennzeichnet, dass** die Ladefläche eines Fahrzeugsaufliegers (16) das Rahmenelement (12) bildet.

16. Anordnung nach einem der Ansprüche 13 bis 15, **dadurch gekennzeichnet, dass** die Steuereinrichtung ausgebildet und eingerichtet ist, die Ansteuerung der Stellelemente (11) zu sperren, falls sich mindestens eines der Sicherungsmittel in der Sicherungsstellung befindet.

17. Anordnung nach einem der Ansprüche 10 bis 16, **dadurch gekennzeichnet, dass** die Steuereinrichtung ausgebildet ist, durch initiale gleichzeitige Ansteuerung aller der Stellelemente (13) den Container (10) aus der Transportstellung in eine Hubstellung unter Erreichen einer vorgegebenen Mindesthöhe über dem Rahmenelement (12) zu überführen.
